# EUROPÄISCHE PATENTANMELDUNG

(11) **EP 4 008 578 A1**
(43) Veröffentlichungstag der Anmeldung: **08.06.2022**
(21) Anmeldenummer: 22000074.9
(22) Anmeldetag: 24.03.2022
(51) Int. Cl.: B60L 7/10

(54) **REGENERATIVER ELEKTROAUTO ANTRIEB**

(30) Priorität: 26.01.2022 DE 202022000196 U
(71) Anmelder: Arkadi Strauß, 33330 Gütersloh (DE)
(72) Erfinder: Arkadi Strauß, 33330 Gütersloh (DE)

(57) **Zusammenfassung**

Mit der Verwirklichung der Idee/Erfindung wird die externe Zuführung von Antriebsenergie, also das Laden der Batterie mit Strom an Ladestationen für E-Autos, durch interne Stromerzeuger (Fig. 1.1) zum Aufladen ersetzt.

Mit der Einführung dieser Technik werden Umweltprobleme, die durch die jetzige Generation von E-Autos verursacht werden, wesentlich und nachhaltig verbessert bzw. fallen ganz weg.

Dazu zählen die Faktoren:
Kein Laden der Antriebsbatterie an Ladestationen
Kein externer Stromverbrauch
Keine Einschränkungen der Reichweiten
Kein CO2- Ausstoß im Fahrbetrieb
Keine Standort.- und Infrastrukturprobleme für Ladestationen
Wartezeiten an Ladestationen für den Ladevorgang

Hier ist nur der Vergleich und der Vorteil zu der bisherigen Generation von E-Autos beschrieben. Die positiv zu bewertenden Situationen zu den Verbrennungsmotoren sind hier nicht erwähnt.

Diese Idee/Erfindung ist physikalisch und ingenieurtechnisch realisierbar und ein Meilenstein und Wende in der zukünftigen Energienutzung für den Antrieb von Kraftfahrzeugen.

## Beschreibung

Die bisherigen E-Autos zeichnen sich dahin gehend aus, dass für die Verwirklichung der Umkehr von den Verbrennern zu einer "ökologisch sinnvollen Autokultur" durch Kaufanreize kein sinnvolles, nützliches Ergebnis für die Umweltbilanz zu Stande gekommen ist. Die Autoindustrie nutzt für die Ökobilanz den Mix aus E-Auto und Verbrenner für die Zulassung großer Verbrenner-PKW. Weitere Minuspunkte der jetzigen Generation der E-Autos sind: Die Reichweiten sind allgemein unangemessen, die Ladezeiten für die elektrische Energie der E-Autos dauern "eine Ewigkeit", die Ladestationen werden zum Teil in blindem Aktionismus aus dem Boden gestampft mit dem enormen Verbrauch an Material und Grund und Boden.

Mit meiner Idee und Erfindung hat ein E-Auto keine Reichweitenprobleme, wird keine Ladesäulen benötigen und der Autofahrer/Käufer der E-Autos keine Kosten zum Tanken/Laden haben.

Die Idee zur Lösung dieses Problems: Es muss mehr Energie erzeugt werden als verbraucht wird.

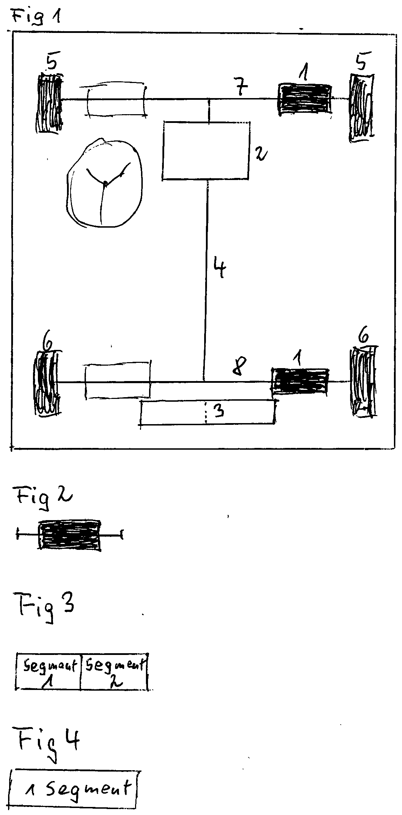

Der Weg dahin:
Dem Verbraucher Elektromotor Fig. 1 Nr. 2 setze ich zwei Elektrogeneratoren Fig. 1 Nr. 1 zur Stromerzeugung entgegen. Trotz Reibungs-. und Trägheitsverluste bei den Generatoren wird in der Summe mehr Energie erzeugt als der E-Motor verbraucht. Mit dem "mehr" an Energie speichere ich Fig. 3 ein Batteriesegment, und das zweite Segment treibt den E-Motor an. Wenn dann die Energie im Antriebssegment einen vorbestimmten "Tiefpunkt" erreicht, schaltet eine Überwachungselektronik auf das in der Zwischenzeit geladene Segment für den Antrieb, und das "leere" Segment wird in der Folge geladen. Und dieses dann im Wechsel in umgekehrter Weise, usw..

Die weitere Möglichkeit ist der Batteriespeicher mit einem Segment Fig. 4. Hier erfolgt sowohl der Antrieb als auch die Aufladung zeitgleich in einem "Arbeitsgang". Auch hier ist eine Steuerung des Batteriemanagements zur Koordinierung des Vorganges notwendig.

### Bezugszeichenliste

Fig. 1
   - 1: Stromgenerator
   - 2: Elektroantriebsmotor
   - 3: Batteriestromspeicher
   - 4: Kardanwelle
   - 5: Vorderrad lenkbar
   - 6: Hinterrad nicht lenkbar
   - 7: Vorderachse
   - 8: Hinterachse
Fig. 2
   Stromgenerator mit Achssegment als Bausatz
Fig. 3
   Batteriestromspeicher mit zwei Segmenten
Fig. 4
   Batteriestromspeicher ein Segment

## Patentansprüche

1. Der Schutzanspruch 1 ist **dadurch gekennzeichnet, dass** Fig. 1 Nr. 1 Stromgenerator jeweils auf der Vorderachse Fig. 1 Nr. 7 und Hinterachse Fig. 1 Nr. 8 verbaut wird.

2. Der Schutzanspruch 2 ist **dadurch gekennzeichnet, dass** der Stromgenerator mit Achssegment als Bausatz Fig. 3 gebaut wird und an der Vorderachse Fig. 1 Nr. 7 und an der Hinterachse Fig. 1 Nr. 8 verbaut wird.

3. Der Schutzanspruch 3 ist **dadurch gekennzeichnet, dass** eine Kardanwelle Fig. 1 Nr. 4 für den permanenten Antrieb der Vorderachse Fig. 1 Nr. 7 und der Hinterachse Fig. 1 Nr. 8 mit den verbauten Stromgeneratoren Bausatz Fig. 3 sorgt.

4. Der Schutzanspruch 4 ist **dadurch gekennzeichnet, dass** der Batteriestromspeicher Fig. 1 Nr. 3 sowohl in der Form mit zwei Segmenten Fig. 3 als auch als ein Segment Fig. 4, wahlweise zur Stromspeicherung genutzt wird.

5. Der Schutzanspruch 5 ist **dadurch gekennzeichnet, dass** wenn elektrotechnisch bei E-LKW und E-Bussen notwendig auf die Vorderachse Fig. 1 Nr. 7 und auf die Hinterachse Fig. 1 Nr. 8 je ein Stromgenerator mit Achssegment als Bausatz Fig. 3 zusätzlich verbaut wird.
